Europäisches Patentamt

European Patent Office

Office européen des brevets

(11) Publication number: **0 443 712 A2**

# EUROPEAN PATENT APPLICATION

(21) Application number: 91300305.9

(51) Int. Cl.⁵: **H04L 25/49**

(22) Date of filing: 16.01.91

The title of the invention has been amended (Guidelines for Examination in the EPO, A-III, 7.3).

(30) Priority: 23.02.90 GB 9004170

(43) Date of publication of application:
28.08.91 Bulletin 91/35

(84) Designated Contracting States:
AT BE CH DE DK ES FR GB GR IT LI LU NL SE

(71) Applicant: GEC PLESSEY
TELECOMMUNICATIONS LIMITED
New Century Park P.O. Box 53
Coventry, CV3 1HJ(GB)

(72) Inventor: Warburton, Clive Rowland
15, John Simpson Close
Wolston, NR Coventry CV8 3HX(GB)

(74) Representative: MacKenzie, Ian Alastair
Robert
The General Electric Company, p.l.c. Central
Patent Department Wembley Office Hirst
Research Center East Lane
Wembley Middlesex HA9 7PP(GB)

(54) Modification of an HDB3 system to allow auxiliory data transmission.

(57) The present invention concerns the transmission of digital data in a time division Multiplex (TDM) system using what is known as the HDB3 code. This code uses alternate mark inversion but with violations to code four consecutive zeros and the present invention provides auxiliary channels in a TDM system using HDB3 code. This is achieved by modifying the HDB3 encoded data so that auxiliary data can be carried with the HDB3 encoded data.

EP 0 443 712 A2

The present invention concerns the transmission of digital data and in particular the transmission of data in a Time Division Multiplex (TDM) system using what is known as the HDB3 code.

HDB3 coding has been in use for many years and uses alternate mark inversion (AMI) but with violations, i.e. two marks of the same polarity, to code four consecutive '0's. A mark corresponds to and is half the width of the '1' in the traffic signal.

The present invention is concerned with providing auxiliary channels in a TDM system using HDB3 code.

Accordingly the present invention consists of a system for transmitting HDB3 encoded digital data and comprising means for modifying the HDB3 encoded data so that auxiliary data can be carried with the HDB3 encoded data.

Preferably the auxiliary data is introduced to the HDB3 encoded data by modifying the HDB3 code for four consecutive '1's or '0's.

In order that the present invention may be more readily understood, an embodiment thereof will now be described by way of example and with reference to the accompanying drawings, in which:-

Figure 1 is a block diagram of showing the encoding part of a data transmission system according to the present invention,

Figure 2 is a similar diagram showing the corresponding decoding part of the system, and

Figure 3 is a block diagram of a code insertion circuit.

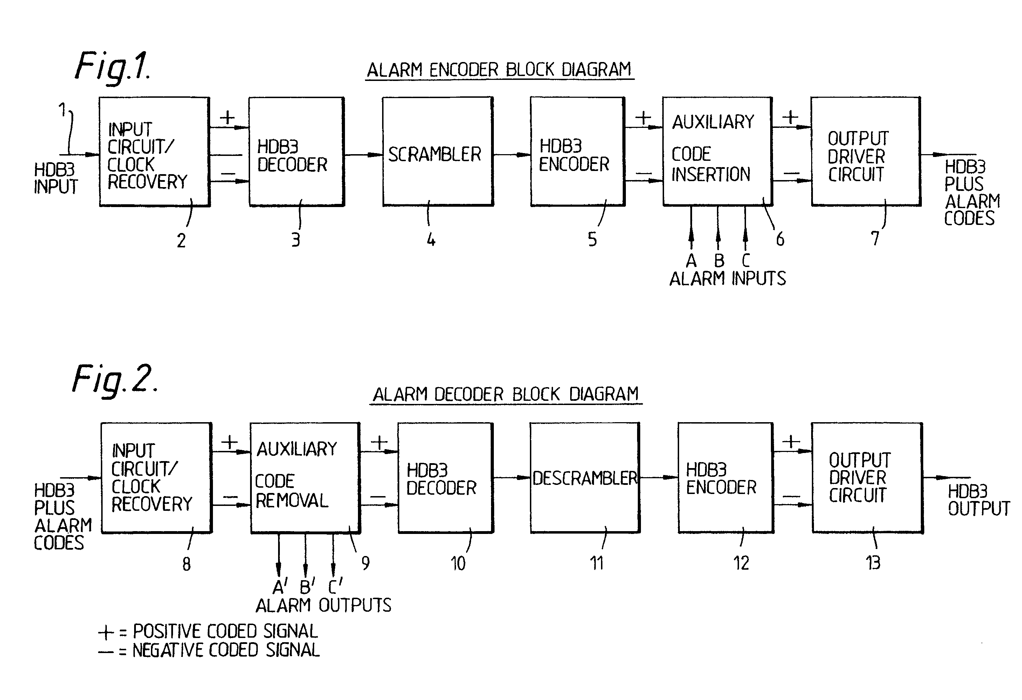

Referring now to Figure 1 of the accompanying drawings this shows a digital input signal 1 to be HDB3 encoded. This signal 1 is supplied to an input circuit/clock recovery circuit 2 the positive and negative signal levels being separately transmitted to an HDB3 decoder circuit 3 where the input signal is HDB3 decoded in the known manner. The decoded data is then sent to a scrambler circuit 4, a HDB3 encoder circuit 5 for encoding the scrambled signal and an auxiliary code insertion circuit 6. The purpose of scrambler circuit 5 is to ensure that the encoded data signal is sufficiently random for the purposes of the auxiliary code insertion circuit 6.

As already mentioned the object of the invention is to enable one or more new additional or auxiliary data channels to be carried by the main HDB3 coded data signal by utilising certain of the properties of the HDB3 code.

This, in the present embodiment, is achieved by the auxiliary code insertion circuit 6 which modifies the four consecutive '1's or four consecutive '0's coded in the HDB3 code in an appropriate manner.

HDB3 code uses alternate mark inversion (AMI) but with violations, i.e. two marks of the same polarity, to code four consecutive '0's. A mark corresponds to and is half the width of the '1' in the traffic signal. In the description below a positive mark is shown as a + and a negative mark is shown as a -. To convey the two states of the auxiliary information the HDB3 code is modified to indicate one state and not modified to indicate the other state of the auxiliary input.

The HDB3 code for four '1's is + - + - or - + - + depending on the polarity of the previous '1' bit. The modification to the code changes these to + + -- or -- + +, which does not change the overall d.c. content of the code but is recognisable by the two consecutive bits of the same polarity.

The HDB3 code for four '0's depends on the polarity of the violation which has been used for the previous four '0's. If the code is 10000 the options are + 000 + and its inverse -000- or + -00- and its inverse - + 00 +. The modification changes these codes to + + -0 + and -- + 0- or + -- + - and - + + - +, which again retains the overall d.c. content of the signal and is recognisable by the two consecutive bits of the same polarity.

As the polarity of the signal may not be maintained throughout the transmission of the modified signal it is not possible to distinguish between + + -- and -- + + or between + + -0 + and -- + 0- or between + -- + - and - + + - + at the receive end, so these codes can only be used as three auxiliary channels.

These three channels are shown at A, B, C in Figure 1. One use to which the auxiliary channels thus made available can be put is the transmission of alarm data. The output of auxiliary code insertion circuit 6 is supplied to a conventional output driver circuit 7.

Referring now to Figure 2 of the drawings this shows the receiver end of the transmission system. Thus the HDB3 coded data signal plus auxiliary codes is received by an input/clock recovery circuit 8 and supplied to an auxiliary code removal circuit 9 having three outputs A', B' and C'.

The other outputs of auxiliary decode circuit 9 is the original, but scrambled HDB3 coded data signal, the codes for the auxiliary channel having been removed, and this is supplied to an HDB3 decoder circuit 10, a descrambler circuit 11, an HDB3 encoder circuit 12 and an output driver circuit 13 for onward transmission.

From the above description it is apparent that the method described of conveying auxiliary channels is applicable to any transmission system which maintains the HDB3 coded signal intact from the auxiliary channel encoder to the auxiliary channel decoder such as an HDB3 metallic line system or a simple fibre optic line system.

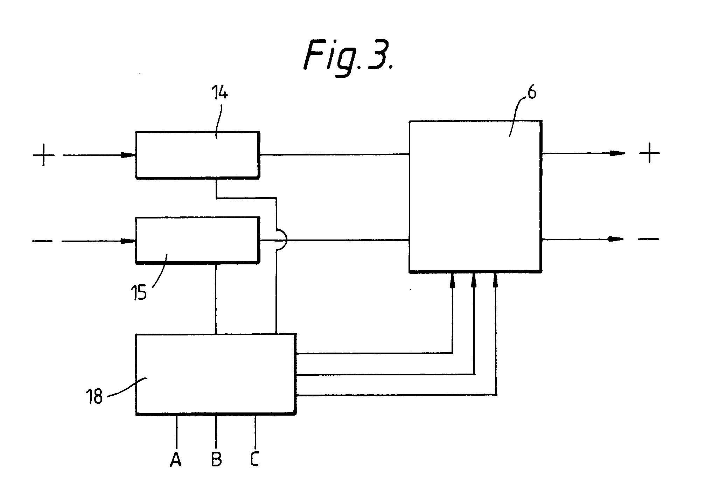

Figure 3 of the drawings shows the essential features of the auxiliary code insertion circuit 6. Thus the negative and positive signals are supplied to a respective pair of shift registers 14 and 15 the serial outputs of which are taken to a code change circuit 16 whilst parallel outputs 17 are taken to a code detect circuit 18 which detects the codes to be altered and also receives the auxiliary signal channels A, B and C to be inserted. The outputs of circuit 18 are used to control code change circuit 16 in an appropriate manner.

The Auxiliary Channels can be used to bring alarms or other information from a remote multiplexer and send information in the opposite direction, which is not possible on present HDB3 metallic Line Systems. The use of this means gives Auxiliary Channels which use the Line System only and hence have a higher reliability than channels using spare bits in the Multiplex frame timeslot zero due because fewer components are involved. Also the Auxiliary Channels are still available if the Multiplex frame fails to be transitted.

It will also be appreciated that if the HDB3 traffic signal is already scrambled then the HDB3 Decoder, Scrambler/Descrambler and HDB3 Decoder shown on the Block Diagram can be omitted.

Furthermore the input circuit and clock recovery in the Alarm Decoder could contain signal regenerator circuitry which recovers the loss of the transmission medium.

Finally if the Alarm Encoder and Decoder are part of a Multiplex/Demultiplex Equipment the Input Circuit/Clock Recovery and HDB3 Decoder of the Alarm Encoder together with the HDB3 Encoder and Output Driver Circuit of the Alarm Decoder will not be required.

## Claims

1. A system for transmitting HDB3 encoded digital data and characterised in that it comprises means (6) for modifying the HDB3 encoded data so that auxiliary data can be carried with the HDB3 encoded data.

2. A system as claimed in Claim 1 and further characterised in that said means (6) is operative to modify those sections of the HDB3 code representing four consecutive "1"s or four consecutive "0"s.

3. A system as claimed in Claim 2 and further characterised in that the modifying means (6) is operative to modify the HDB3 code for four "1"s to + +-- or --+ +, and is operative to modify the HDB3 code for four 0000s to + +- 0+ and --+0- or +--+- and -+ +-+.

4. A system as claimed in any one of the preceding claims and further characterised in that it comprises an input clock recovery circuit (2) providing positive and negative inputs to an HDB3 decoder circuit (3) the output of which is connected to a scrambler circuit (4) in turn connected to an HDB3 encoder circuit (5), the HDB3 encoder circuit (5) providing positive and negative inputs to auxiliary code insertion means (6) in turn providing an output to an output drive circuit (7).

## Fig.1.

HDB3 INPUT → INPUT CIRCUIT/ CLOCK RECOVERY (2) → + / − → HDB3 DECODER (3) → SCRAMBLER (4) → HDB3 ENCODER (5) → + / − → AUXILIARY CODE INSERTION (6) → + / − → OUTPUT DRIVER CIRCUIT (7) → HDB3 PLUS ALARM CODES

A B C ALARM INPUTS

## Fig.2.

HDB3 PLUS ALARM CODES → INPUT CIRCUIT/ CLOCK RECOVERY (8) → + / − → AUXILIARY CODE REMOVAL (9) → + / − → HDB3 DECODER (10) → DESCRAMBLER (11) → HDB3 ENCODER (12) → + / − → OUTPUT DRIVER CIRCUIT (13) → HDB3 OUTPUT

$A'$ $B'$ $C'$ ALARM OUTPUTS

+ = POSITIVE CODED SIGNAL
− = NEGATIVE CODED SIGNAL

EP 0 443 712 A2

# Fig.3.